# EUROPEAN PATENT APPLICATION

(11) **EP 2 165 820 A2**
(43) Date of publication of application: **24.03.2010**
(21) Application number: 09169848.0
(22) Date of filing: 09.09.2009
(51) Int. Cl.: B29C 65/02, B29C 65/16, B29K 27/18

(54) **Article And Method For Forming An Article**

(30) Priority: 17.09.2008 US 212476
(71) Applicant: General Electric Company, Schenectady, NY 12345 (US)
(72) Inventor: Bansal, Vishal, Overland Park, KS 66223 (US); Benton, Cordell, Columbia, SC 29169 (US); Ahmed, Kawsar, Bound Brook, NJ 08805 (US)
(74) Representative: Szary, Anne Catherine

(57) **Abstract**

An article (10) is provided. The article includes a plastic material, and an expanded polytetrafluoroethylene (ePTFE) laminate (16) coupled to the plastic material, wherein the ePTFE laminate is laser welded to the plastic material.

## Description

### BACKGROUND OF THE INVENTION

The embodiments described herein relate generally to an article formed by coupling an expanded polytetrafluoroethylene (ePTFE) laminate to a plastic material and, more particularly, to a laser welding method for sealingly coupling an ePTFE laminate to a plastic housing or enclosure to form a microvent.

Components for telecommunications equipment, lighting enclosures, control units, sensors, electrical and electronic devices including computers, cellular phones, PDAs, and two-way radios, marine equipment, and automotive components, including gauges, axles, transmissions, motors and exterior lights, for example, are exposed to harsh environmental elements and conditions. These components may include a gas permeable protective vent that provides an effective barrier from liquids and debris, such as dust and dirt, while allowing heat dissipation and/or gas permeation through the protective vent. Further, the protective vent may prevent or limit pressure differentials that may damage enclosure seals, exposing sensitive components to fluids, such as water or lubricants, and debris including dirt and dust.

Changing temperatures may cause pressure differentials between an internal volume of the enclosure and an external environment. A change in temperature may be caused by a variety of factors including environmental temperature variations, fluctuations caused by electronics and lights, engine heat, friction caused by meshing gears, wind, and/or water spray. If these pressures are not equalized or relieved, the pressures create stress on the housing and seals that may cause cracks, leaks and housing or seal failures that may eventually lead to water and contaminants entering the enclosure and, ultimately, device failure.

Condensation may also create adverse effects in many applications, such as within automotive engine components and exterior lighting. For example, condensation that has entered a lighting enclosure may cause a decreased light output resulting in safety and/or quality issues. Condensation may also corrode circuit boards and cause premature component failure. Water and water vapor can enter enclosures through defective seals, cracks, and plastic material used in connectors and/or housings.

Conventional components may include long tubes, rattle caps, tortuous paths, foam, one-way valves or hermetic sealing, or one or more vents. At least some vents include a gas permeable, oleophobic membrane that allows the continuous exchange of air and gasses between the interior of the housing and the environment while preventing liquids, dirt and dust from entering the housing. One suitable membrane includes ePTFE. The microporous structure of the ePTFE membrane prevents liquid penetration while allowing for the free passage of gases to prevent or limit leakage, provide a high level of airflow, even after liquid contact, and prevent contamination.

Conventional methods for manufacturing such vents include attaching the ePTFE membrane to a plastic housing using a pressure sensitive adhesive or an ultrasonic or hot bar bonding process. Both these approaches present distinctive problems and/or shortcomings. Adhesives lead to contamination issues and ultrasonic or hot bar bonding processes produce undesirable relatively large, discontinuous and/or inconsistent bond lines.

### BRIEF DESCRIPTION OF THE INVENTION

In one aspect, an article is provided. The article includes a plastic material and an expanded polytetrafluoroethylene (ePTFE) laminate coupled to the plastic material.

In another aspect, a method is provided for coupling an expanded polytetrafluoroethylene (ePTFE) laminate to a plastic material to form an article. The method includes providing a plastic material. The ePTFE laminate is positioned on the plastic material and the ePTFE laminate is coupled to the plastic material.

In another aspect, a microvent is provided. The microvent includes a plastic housing defining an opening. An expanded polytetrafluoroethylene (ePTFE) laminate is coupled to the plastic housing to seal the opening. The ePTFE laminate includes an ePTFE membrane laminated to a thermoplastic polymeric textile base material.

### BRIEF DESCRIPTION OF THE DRAWINGS

Figure 1 is a schematic cross-sectional view of an exemplary microvent including a plastic housing and an expanded polytetrafluoroethylene (ePTFE) laminate coupled to the plastic housing using a suitable laser welding method; and
Figure 2 is a schematic perspective view of a laser welding apparatus and an exemplary microvent manufactured using a suitable laser welding method.

### DETAILED DESCRIPTION OF THE INVENTION

The embodiments described herein provide an article and a method for coupling an expanded polytetrafluoroethylene (ePTFE) laminate to a plastic material to form an article. The embodiments described herein further provide a microvent and a method for fabricating a microvent. The microvent is suitable for use in any application that may require a gas permeable, water resistant vent. For example, the microvent as described herein may be suitable for use in lighting enclosures, domestic appliances, portable and stationary electronic or electrical devices, marine applications, sensors, automotive components, computers, and telecommunications equipment. The microvent may also be used for packaging industrial and consumer chemicals and cleaners, pharmaceutical and biotechnology products, and freeze-dried products.

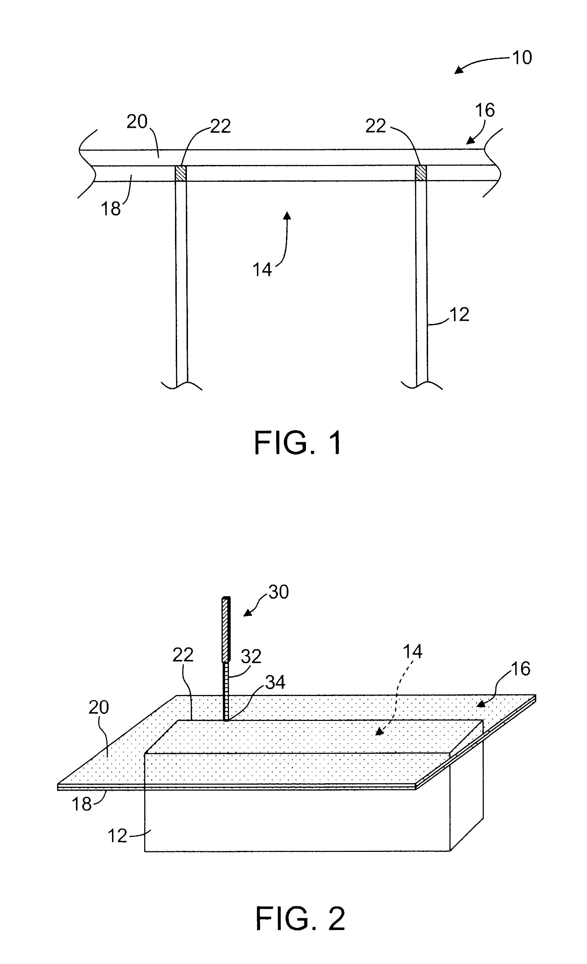

Referring to Figures 1 and 2, an exemplary microvent 10 includes an enclosure, such as housing 12, fabricated from a suitable plastic material. In one embodiment, housing 12 is fabricated of a suitable plastic material, such as a thermoplastic polymer material including a polyester material, such as polybutylene terephthalate (PBT). In a further embodiment, the plastic material is sufficiently rigid to provide adequate strength to microvent 10. In alternative embodiments, housing 12 is fabricated form a suitable plastic material including, without limitation, Nylon, polyurethane, glass-filled plastics, high density polyethylene, polypropylene, and combinations of suitable materials. It should be apparent to those skilled in the art and guided by the teachings herein provided that housing 12 may be fabricated of any suitable plastic material that facilitates manufacturing microvent 10 using a laser welding method as described herein. In one embodiment, housing 12 defines a volume and one or more openings 14, such as an aperture, a hole, a bore, a passage, and/or a slot, providing communication with the defined volume.

An ePTFE laminate 16 is coupled to housing 12. In one embodiment, ePTFE laminate 16 is coupled to housing 12 using a laser welding method to laser weld ePTFE laminate 16 to housing 12. Advantages of a laser welding method over conventional coupling or bonding methods include high throughput speeds, relatively thin and precise weld lines resulting in precise and accurate welding of materials, particularly when complicated or advanced weld lines are necessary, cleanliness and ease. In alternative embodiments, ePTFE laminate 16 is coupled to housing 12 using any suitable coupling method including, without limitation, an ultrasonic, a radio frequency or a hot bar welding method. In one embodiment, ePTFE laminate 16 includes a suitable textile base material 18, such as one or more thermoplastic polymeric fabric base layers including, without limitation, suitable woven and/or nonwoven textile fabrics such as bicomponent nonwoven fabrics, polyester, nylon, polypropylene, polyethylene, or a combination of suitable thermoplastic materials. In the exemplary embodiment, textile base material 18 includes one or more polymers each having a polymer melting point greater than a melting point of the plastic material of housing 12. In a particular embodiment, a difference between the polymer melting point and the plastic material melting point is not greater than about 60°C or, more specifically, not greater than about 45°C or, even more specifically, not greater than about 30°C. In one embodiment, the polymer melting point is equal to the plastic material melting point.

ePTFE laminate 16 includes at least one ePTFE membrane 20 laminated to textile base material 18 using any suitable laminating process known to those skilled in the art and guided by the teachings herein provided including, without limitation, a thermal lamination process or an adhesive lamination process. In one embodiment, ePTFE membrane 20 is transparent to a laser beam.

Referring further to Figure 2, ePTFE laminate 16 is coupled to a plastic material, such as housing 12. Housing 12 defines one or more openings 14. In one embodiment, the plastic material includes a carbon black to facilitate focusing energy on a weld line 22, as shown in cross-section in Figure 1, formed as ePTFE laminate 16 is coupled to the plastic material. ePTFE laminate 16 including ePTFE membrane 20 laminated to textile base material 18 is positioned over opening 14 such that textile base layer 18 contacts a surface of housing 12 defining a periphery of opening 14.

As shown in Figure 2, a laser welding apparatus 30 includes a laser head 32 having a focal lens 34 that contacts ePTFE laminate 16 and applies a suitable pressure to ePTFE laminate 16 as laser head 32 traverses or moves across ePTFE laminate 16. Laser welding apparatus 30 generates energy to form weld line 22. Laser head 32 generates a laser beam (not shown) that generates a suitable energy through ePTFE membrane 20 laminated to nonwoven base material 18 to couple ePTFE laminate 16 to housing 12 and seal opening 14. More specifically, in one embodiment, textile base material 18 of ePTFE laminate 16 is laser welded to housing 12 to couple ePTFE laminate 16 to housing 12.

In one embodiment, the laser welding method described herein is utilized for manufacturing microvent 10. Microvent 10 includes a plastic housing 12 defining one or more openings 14. ePTFE laminate 16 is positioned over opening 14, and ePTFE laminate 16 is laser welded to housing 12 to couple ePTFE laminate 16 to housing 12 and seal opening 14. In one embodiment, at least textile base material 18 is laser welded to housing 12. In a particular embodiment, a laser beam is passed through ePTFE membrane 20 laminated to textile base material 18 as focal lens 34 contacts ePTFE membrane 20 to apply pressure to urge ePTFE laminate 16 against housing 12. Laser head 32 generates energy in the form of a laser beam to form weld line 22. In alternative embodiments, ePTFE laminate 16 is coupled to housing 12 using any suitable coupling method including, without limitation, an ultrasonic, a radio frequency or a hot bar welding method.

### EXAMPLE

The embodiments are more particularly described in the following Example which is intended as illustrative only since numerous modifications and variations therein will be apparent to those skilled in the art and guided by the teachings herein provided.

### Methods:

A laser welding apparatus and method were utilized to determine a weldability of the following materials (Table 1) to a housing fabricated from polybutylene terephthalate (PBT) having a melting point (m.p.) of 220°C. The laser welding apparatus included a laser welding head having a focal lens that generated energy in the form of a laser beam to weld the ePTFE laminate to the housing. An 80 millimeter (mm) focal lens was used with a small clamping fixture. A test pressure of 4 ± 0.5 Bar with a cylinder diameter of 2 mm to 50 mm was also used. The ePTFE laminate included an ePTFE membrane laminated to a textile base material including a thermoplastic polymer such as polyester, polypropylene (PP), nylon, polyethylene, or a combination of thermoplastic polymer materials. Variables of the laser welding method included power (Watts), speed (millimeter/minute (mm/min.)), clamping pressure (Bar), and a z-axis height measured from a bottom of the focal lens to the surface of the ePTFE laminate (millimeter (mm)). Table 2 below includes test observations.

### Materials:

**Table 1**

| Material | Description |
|---|---|
| Laminate A | Polyester nonwoven (m.p. 262°C) laminated to ePTFE membrane. |
| Laminate B | Polypropylene nonwoven (m.p. 160°C) laminated to ePTFE membrane. The ePTFE membrane has a hydrophilic polymeric coating (Polyvinyl alcohol) applied to it. |
| Membrane C | ePTFE membrane with a hydrophilic polymeric coating (Polyvinyl alcohol). |
| Laminate D | Bicomponent polyester nonwoven laminated to ePTFE membrane. The polyester nonwoven has fibers with a sheath-core configuration, in which the core polymer is polyester (m.p. 262°C) and the sheath polymer is a co-polymer of polyester (m.p. 220°C). |
| Laminate E | Woven nylon fabric (m.p. 250°C) laminated to ePTFE membrane. |
| Membrane F | ePTFE membrane with an oleophobic polymeric coating. |
| Membrane G | ePTFE membrane. |
| Fabric H | Bicomponent polyester nonwoven fabric. The polyester nonwoven has fibers with a sheath-core configuration, in which the core polymer is polyester (m.p. 262°C) and the sheath polymer is a co-polymer of polyester (m.p. 220°C). |

### Test Observations:

**Table 2**

| Test No. | Material | Power (Watts) | Speed (mm/min.) | Test Observations |
|---|---|---|---|---|
| 1 | Laminate A | 7.5 | 1200 | Slight weld. |
| 2 | Laminate A | 9.0 | 1200 | Good weld |
| 3 | Laminate B | 6.0 | 1200 | No weld |
| 4 | Laminate B | 8.0 | 1200 | No weld |
| 5 | Laminate B | 10 | 1200 | No weld |
| 6 | Membrane C | 7.5 | 1200 | No weld |
| 7 | Membrane C | 11 | 1200 | No weld |
| 8 | Membrane C | 15 | 1200 | No weld |
| 9 | Laminate D | 9 | 1200 | Good weld |
| 10 | Laminate E | 7.5 | 1200 | Good weld |
| 11 | Membrane F | 7.5 | 1200 | No weld |
| 12 | Membrane G | 20 | 1200 | No weld |
| 13 | Fabric H | 10 | 1200 | Good weld |

The Example provides the following observations on weldability of the test materials: (a) an ePTFE membrane could not be welded to rigid plastic unless the ePTFE membrane was laminated to a fabric, neither a hydrophobic nor an oleophobic coating on the ePTFE membrane enabled welding to rigid plastic; (b) laminates including an ePTFE membrane with a polypropylene fabric could not be welded to rigid plastic; and (c) laminates including an ePTFE membrane with a polyester or a Nylon fabric could be successfully welded to rigid plastic.

The above-described embodiments provide an article and a method for forming an article including an expanded polytetrafluoroethylene (ePTFE) laminate coupled to a plastic material. The above-described embodiments further provide a high-speed laser welding method suitable for manufacturing a microvent including an expanded polytetrafluoroethylene (ePTFE) laminate coupled to a plastic housing to seal one or more openings defined in or through the plastic housing. The microvent includes a plastic housing defining the one or more openings. The ePTFE laminate is laser welded to the plastic housing to seal the one or more openings. The ePTFE laminate includes a thermoplastic polymeric woven or nonwoven base material and an ePTFE membrane laminated to the thermoplastic polymeric textile base material.

Exemplary embodiments of an article and a method for forming an article, as well as a microvent and a method for manufacturing a microvent are described above in detail. The article, methods and microvent are not limited to the specific embodiments described herein, but rather, steps of the method and/or components of the article or microvent may be utilized independently and separately from other steps and/or components described herein. Further, the described method steps and/or article or microvent components can also be defined in, or used in combination with, other methods and/or apparatus, and are not limited to practice with only the method and the article or microvent as described herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An article comprising:
a plastic material; and
an expanded polytetrafluoroethylene (ePTFE) laminate coupled to said plastic material.

2. An article in accordance with Claim 1 wherein said plastic material defines an opening, and said ePTFE laminate is coupled to said plastic material to seal said opening.

3. An article in accordance with Claim 1 or Claim 2 wherein said article comprises a microvent.

4. An article in accordance with any preceding Claim wherein said plastic material comprises polybutylene terephthalate.

5. An article in accordance with any preceding Claim wherein said ePTFE laminate comprises at least one ePTFE membrane laminated to a textile base material.

6. An article in accordance with Claim 5 wherein said at least one ePTFE membrane is one of thermally laminated and adhesively laminated to said textile base material.

7. An article in accordance with Claim 5 or Claim 6 wherein said textile base material comprises at least one polymer having a melting point greater than or equal to a melting point of said plastic material.

8. An article in accordance with Claim 7 wherein a difference between the at least one polymer melting point and the plastic material melting point is not greater than 60°C.

9. An article in accordance with any preceding Claim wherein said ePTFE laminate comprises a textile base material including one of a woven textile fabric and a nonwoven textile fabric.

10. An article in accordance with any preceding Claim wherein said ePTFE laminate is laser welded to said plastic material.

11. A method for coupling an expanded polytetrafluoroethylene (ePTFE) laminate to a plastic material to form an article, said method comprising:
providing a plastic material;
positioning the ePTFE laminate on the plastic material; and
coupling the ePTFE laminate to the plastic material.

12. A method in accordance with Claim 11 wherein providing a plastic material comprises providing a plastic material comprising polybutylene terephthalate.

13. A method in accordance with Claim 11 or Claim 12 further comprising forming the ePTFE laminate comprising at least one ePTFE membrane laminated to a textile base material including one of a woven textile fabric and a nonwoven textile fabric.

14. A method in accordance with any of Claims 11 to 13 wherein coupling the ePTFE laminate to the plastic material comprises laser welding a textile base material of the ePTFE laminate to the plastic material.

15. A method in accordance with any of claims 11 to 14 wherein providing a plastic material comprises providing a plastic material comprising a carbon black to facilitate focusing energy on a weld line formed as the ePTFE laminate is coupled to the plastic material.
